# EUROPEAN PATENT APPLICATION

(11) **EP 4 686 213 A1**
(43) Date of publication of application: **28.01.2026**
(21) Application number: 25190819.0
(22) Date of filing: 21.07.2025
(51) Int. Cl.: H04N 23/63, H04N 23/667, H04N 5/907, H04N 5/91, H04N 23/62

(54) **IMAGING APPARATUS, APPLICATION PROGRAM, IMAGING SYSTEM, IMAGING METHOD, AND IMAGING PROGRAM**

(30) Priority: 22.07.2024 JP 2024116793; 30.09.2024 JP 2024170385
(71) Applicant: FUJIFILM Corporation, Tokyo 106-8620 (JP)
(72) Inventor: NAGAI, Toshiaki, Saitama (JP); OMATA, Takeharu, Saitama (JP); SUGAYA, Shota, Saitama (JP); IWAO, Tomoyuki, Saitama (JP)
(74) Representative: Dehns Germany Partnerschaft mbB

(57) **Abstract**

The present invention provides an imaging apparatus, an application program, an imaging system, an imaging method, and an imaging program that enable experience of an analog feel of a film camera by restricting a digital function.

An imaging apparatus (10) includes a controller (31) composed of a processor, and a display (22). In a case where a film camera mode in which image formats are restricted is selected, the controller (31) outputs user interface information related to imaging to the display (22) and restricts output of a live view to the display (22).

## Description

### BACKGROUND OF THE INVENTION

### 1. Field of the Invention

The present disclosure relates to an imaging apparatus, an application program, an imaging system, an imaging method, and an imaging program.

### 2. Description of the Related Art

According to JP2021-158559A, in a case where a lens having a wide angle of view capable of capturing a range of 180 degrees is mounted, a live view image is not displayed in order to avoid an issue of being unable to check a facial expression or the like because a main subject captured in an image having the wide angle of view is small with respect to the whole image.

According to JP2010-183350A, a plurality of master image files recorded on a recording medium as one master image group are collectively subjected to image processing, and slave image files generated through the image processing are recorded on a memory card as one slave image group in association with the master image group.

According to JP2002-94871A, in a case where a shutter switch is pushed, imaging processing is performed in a case where, for example, an image display portion is open (a state where storage is not performed), and the imaging processing is not performed in a case where, for example, the image display portion is in a closed state (a state where storage is performed).

According to JP2007-19869A, an expected image count N1, a captured image count N2, and the like are displayed on an LCD.

According to JP2022-72272A, a DCF system is adopted as a first file system of a digital camera, a cinema system (a system in which a device or the like used for capturing a video can be specified from a filename or the like) is adopted as a second file system, and a file system is selected in accordance with a user input.

According to JP4776967B, a directory immediately under DCIM of a DCF root directory and a directory immediately under SNDR are assigned the same directory name, and a directory structure under the SNDR directory is the same directory structure as a directory structure under DCIM conforming to the DCF standard.

According to JP2007-128282A, a reproducible file placed in a non-standard-conforming directory is moved to a standard-conforming directory and reproduced with insertion of a semiconductor memory card into a digital camera as a trigger, and the reproducible file may be moved through a menu operation performed by a user.

### SUMMARY OF THE INVENTION

An object of an exemplary embodiment of the invention is to provide an imaging apparatus, an application program, an imaging system, an imaging method, and a (non-transitory) computer readable medium for storing an imaging program that enable experience of an analog feel of a film camera by restricting a digital function.

An imaging apparatus according to an aspect of the exemplary embodiment is an imaging apparatus comprising a first monitor portion, and a first processor, in which the first processor is configured to, in a case where a first imaging mode in which image formats are restricted is selected, output user interface information related to imaging to the first monitor portion and restrict output of a live view to the first monitor portion.

It is preferable that the first processor is configured to set a lock on an imaging operation of a first member in the first imaging mode, and unlock the lock based on an operation of a second member. It is preferable that the first processor is configured to, in a case where the lock is unlocked, output information indicating that the imaging operation of the first member is valid, as the user interface information. It is preferable that the first processor is configured to, in a case where the imaging operation is performed while the lock is set on the imaging operation, output information indicating that the imaging operation is invalid.

It is preferable that the first processor is configured to, in a case where an imaging operation of a first member is performed, output information related to a captured image count as the user interface information. It is preferable that, in the first imaging mode, the first processor is configured to restrict output of image data after the imaging to the first monitor portion.

It is preferable that, in a case where a selection to finish the first imaging mode is made, the first processor is configured to store a series of image data obtained by the imaging in a recording medium in a single unit format. It is preferable that the first processor is configured to, in a case where a captured image count in the first imaging mode reaches a predetermined number, invalidate an imaging operation of a first member and unlocking of a lock on the imaging operation of a second member.

It is preferable that the first processor is configured to, in the first imaging mode, in a case where a captured image count reaches a predetermined number, store a series of image data obtained by the imaging in a recording medium in a single unit format. It is preferable that the first processor is configured to, in a case where the first imaging mode is finished, transition to a second imaging mode in which the restriction of the output to the first monitor portion is released.

It is preferable that the first processor is configured to restrict a video among the image formats in the first imaging mode. It is preferable that the first processor is configured to output the predetermined number as the user interface information. It is preferable that the first processor is configured to, in the first imaging mode, store a series of image data obtained by the imaging in a recording medium in a single unit format on which display restriction on the first monitor portion is imposed, and in a case where a selection to finish the first imaging mode is made, release the display restriction.

It is preferable that the first processor is configured to, in the first imaging mode, store a series of image data obtained by the imaging in a second storage region of a recording medium in which a first storage region conforming to a DCF standard and the second storage region not conforming to the DCF standard are generated.

It is preferable that the first processor is configured to, in the first imaging mode, store the series of the image data obtained by the imaging in a second directory that is generated in the second storage region and that does not conform to the DCF standard. It is preferable that the first processor is configured to store image data obtained in a second imaging mode in which the image formats are not restricted, in a first directory of the first storage region.

It is preferable that the first processor is configured to, each time the first imaging mode is selected, create the second directory in the second storage region. It is preferable that the first processor is configured to generate a management file in which information related to the image data is recorded, in the second directory.

It is preferable that the first directory of the first storage region and the second directory are distinguishable from each other. It is preferable that the first directory and the second directory are hierarchized in accordance with the same rule.

It is preferable that the first processor is configured to, in a case where a first instruction is acquired, display the image data stored in the second storage region on the first monitor portion based on the first instruction. It is preferable that the first processor is configured to output an image of list data in which thumbnail images of the image data are listed, to the first monitor portion. It is preferable that the first processor is configured to, in a case where a second instruction from an external apparatus is acquired, move the image data stored in the second storage region to the first storage region based on the second instruction.

A (non-transitory) computer readable medium according to another aspect of the exemplary embodiment stores an application program causing an information processing apparatus that is connected to the imaging apparatus and that includes a second monitor portion and a second processor, to execute a process comprising, via the second processor, performing any of executing a third instruction for enabling the image data stored in the second storage region to be displayed on the second monitor portion, or executing a fourth instruction for moving the image data stored in the second storage region to the first storage region.

It is preferable that the second processor is configured to receive the image data transmitted from the imaging apparatus based on a first instruction, and output an image of list data in which thumbnail images of the image data are listed, to the second monitor portion based on the image data.

An imaging system according to still another aspect of the exemplary embodiment is an imaging system that is connected to the imaging apparatus according to the aspect of the present disclosure, comprising an information processing apparatus including a second monitor portion and a second processor, in which the second processor is configured to perform any of executing a third instruction for enabling the image data stored in the second storage region to be displayed on the second monitor portion, or executing a fourth instruction for moving the image data stored in the second storage region to the first storage region.

An imaging method according to still another aspect of the exemplary embodiment is an imaging method using an imaging apparatus including a first monitor portion and a first processor, the method comprising, via the first processor, a step of outputting, in a case where a first imaging mode in which image formats are restricted is selected, user interface information related to imaging to the first monitor portion and restricting output of a live view to the first monitor portion.

It is preferable that the imaging method further comprises, via the first processor, a step of storing, in the first imaging mode, a series of image data obtained by the imaging in a second storage region of a recording medium in which a first storage region conforming to a DCF standard and the second storage region not conforming to the DCF standard are generated.

A (non-transitory) computer readable medium according to still another aspect of the exemplary embodiment stores an imaging program using an imaging apparatus including a first monitor portion and a first processor, the program causing the first processor to execute a function of outputting, in a case where a first imaging mode in which image formats are restricted is selected, user interface information related to imaging to the first monitor portion and restricting output of a live view to the first monitor portion.

It is preferable that the imaging program further causes the first processor to execute a function of storing, in the first imaging mode, a series of image data obtained by the imaging in a second storage region of a recording medium in which a first storage region conforming to a DCF standard and the second storage region not conforming to the DCF standard are generated.

An imaging apparatus according to still another aspect of the exemplary embodiment is an imaging apparatus comprising a first monitor portion, and a first processor, in which the imaging apparatus has a first imaging mode in which restriction on a digital function is imposed, and in a case where the first imaging mode is selected, the first processor is configured to perform, as the restriction on the digital function, at least two of restriction of image formats, restriction of output of a live view to the first monitor portion, restriction of storage of a series of image data obtained by imaging in the first imaging mode in a format other than a single unit format, restriction of a captured image count, and restriction of a second imaging operation following a first imaging operation.

According to the exemplary embodiments of the invention, an analog feeling of a film camera can be experienced by restricting a digital function.

### BRIEF DESCRIPTION OF THE DRAWINGS

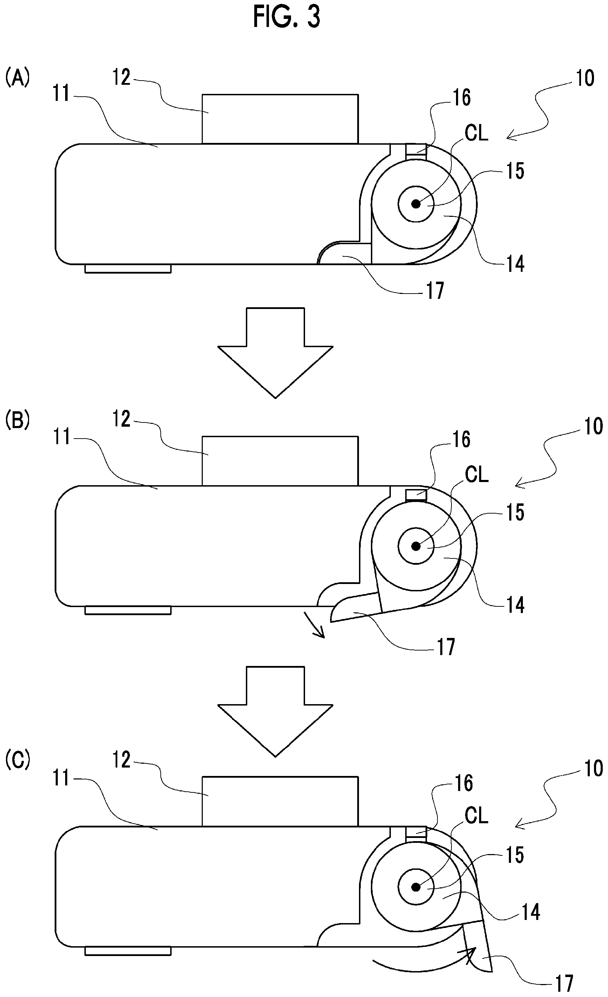

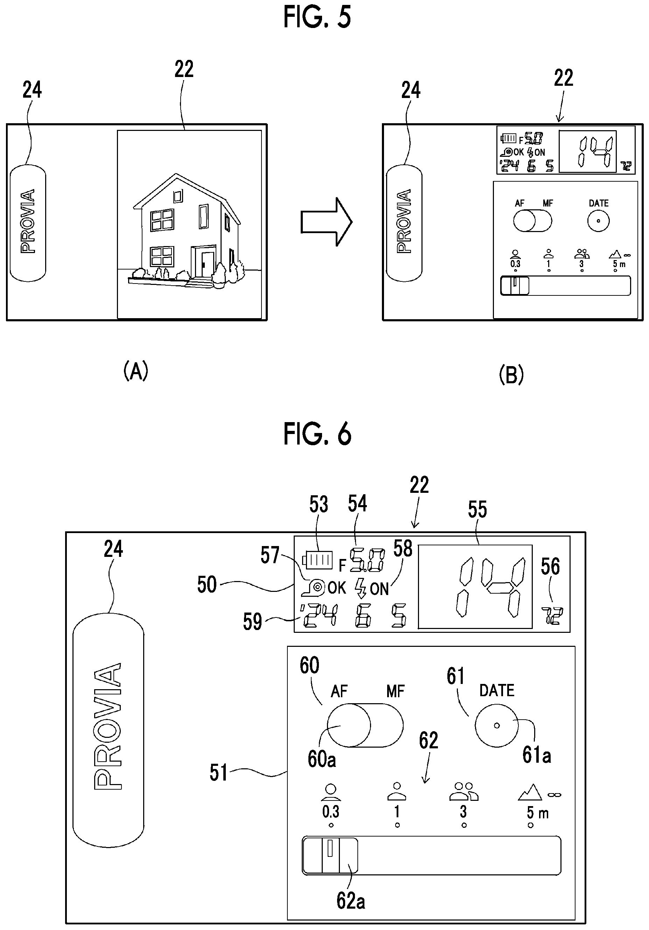

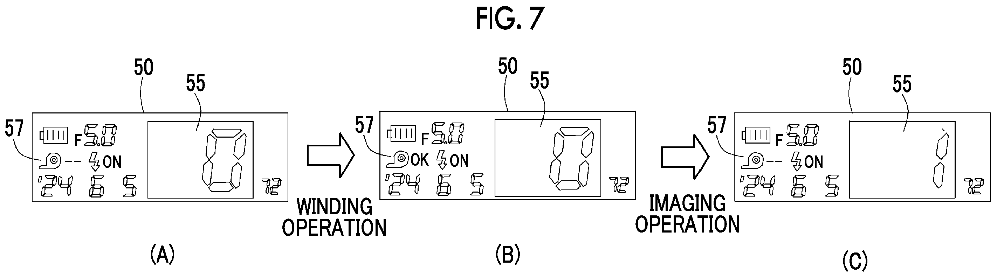

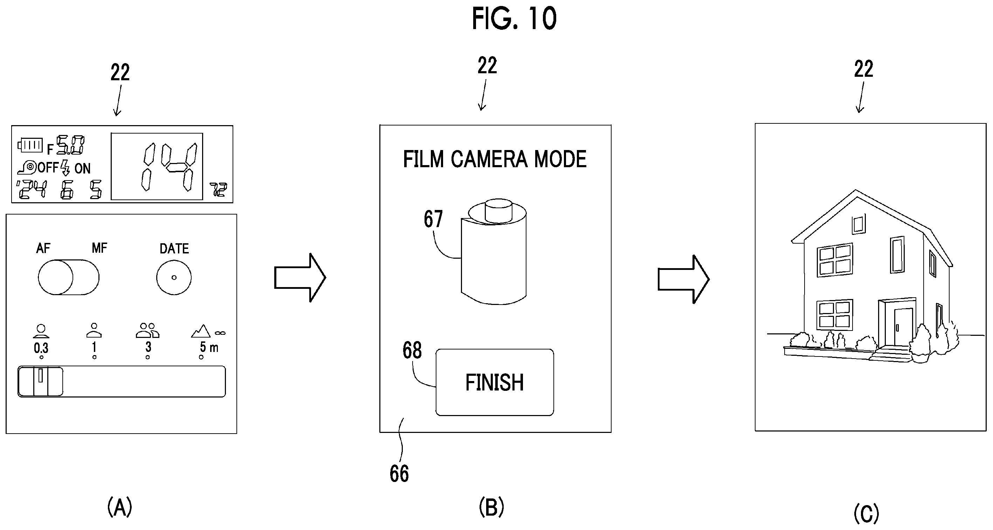

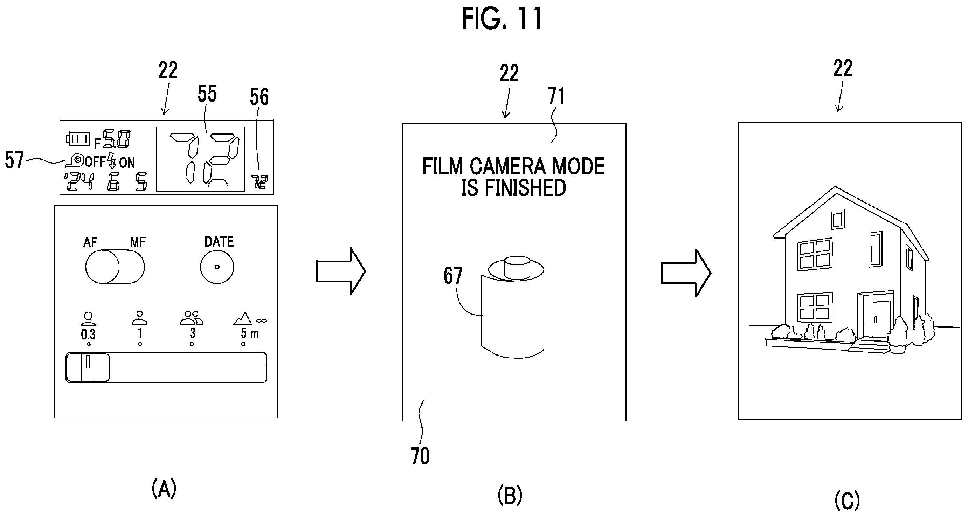

Fig. 1 is a front perspective view of an imaging apparatus.
Fig. 2 is a rear perspective view of the imaging apparatus.
   (A) of Fig. 3 is a descriptive diagram illustrating a position of a lever in a case where the imaging apparatus is powered off, (B) of Fig. 3 is a descriptive diagram illustrating a correct position of the lever in a case where the imaging apparatus is powered on, and (C) of Fig. 3 is a descriptive diagram illustrating a maximum rotational position of the lever during a winding operation.

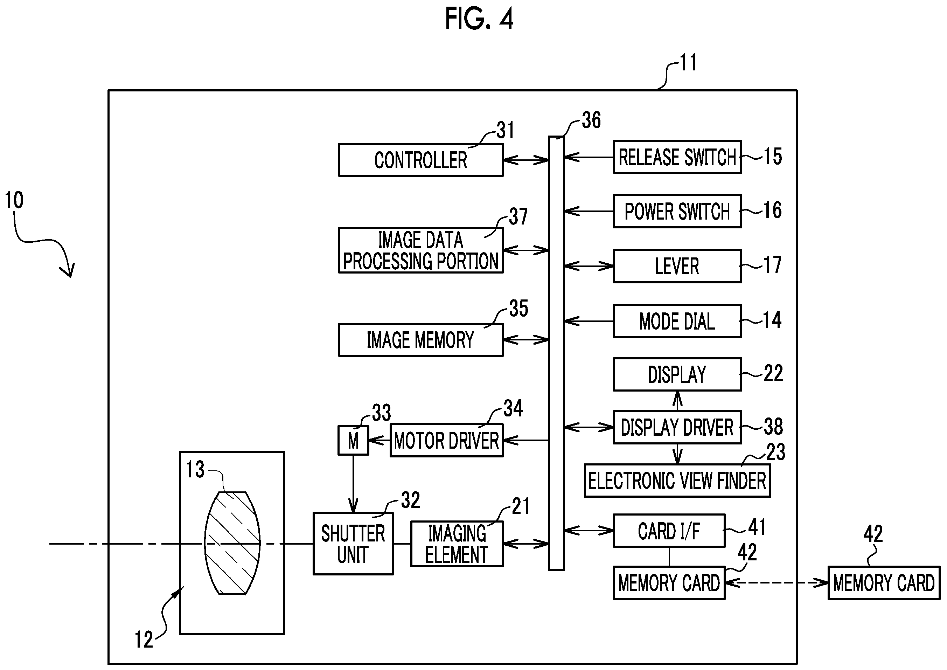

Fig. 4 is a block diagram illustrating a schematic configuration of the imaging apparatus.
   (A) of Fig. 5 is an image diagram of a display displaying a screen of a normal mode, and (B) of Fig. 5 is a diagram of an image of the display displaying a screen of a film camera mode.
Fig. 6 is an image diagram of the display displaying a detailed screen of the film camera mode.
   (A) of Fig. 7 is a descriptive diagram illustrating a screen of a touch operation disabled region immediately after the film camera mode is started, (B) of Fig. 7 is a descriptive diagram illustrating a screen of the touch operation disabled region during the winding operation, and (C) of Fig. 7 is a descriptive diagram illustrating a screen of the touch operation disabled region after an imaging operation is completed.

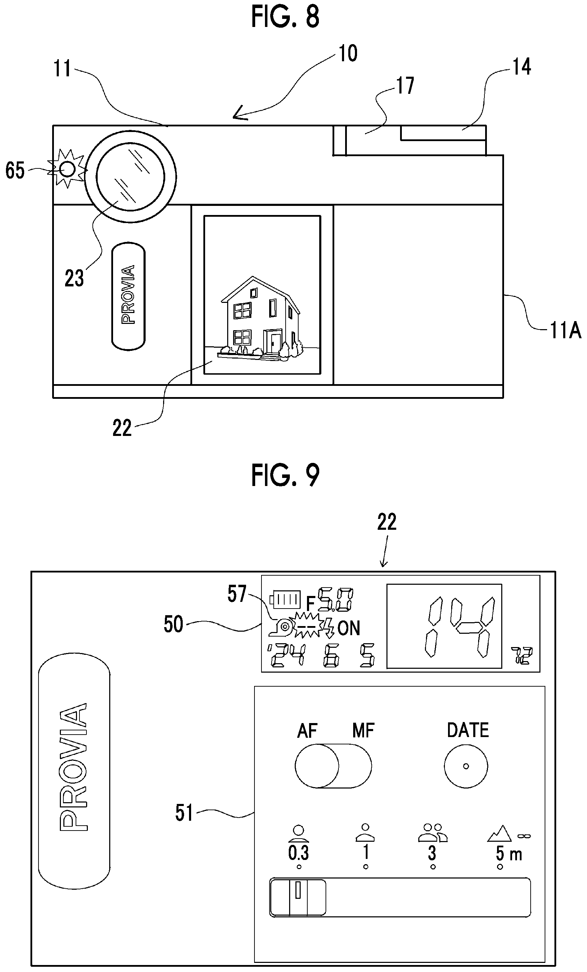

Fig. 8 is a rear view of the imaging apparatus in a case where the imaging operation is performed while a lock is set on the imaging operation.
Fig. 9 is an image diagram of the display in a case where the imaging operation is performed while the lock is set on the imaging operation.
(A) of Fig. 10 is an image diagram of the display displaying a screen during the film camera mode, (B) of Fig. 10 is an image diagram of the display displaying a film camera mode finish selection screen, and (C) of Fig. 10 is an image diagram of the display displaying a normal screen.
(A) of Fig. 11 is an image diagram of the display displaying a screen during the film camera mode, (B) of Fig. 11 is an image diagram of the display displaying a film camera mode finish screen, and (C) of Fig. 11 is an image diagram of the display displaying the normal screen.

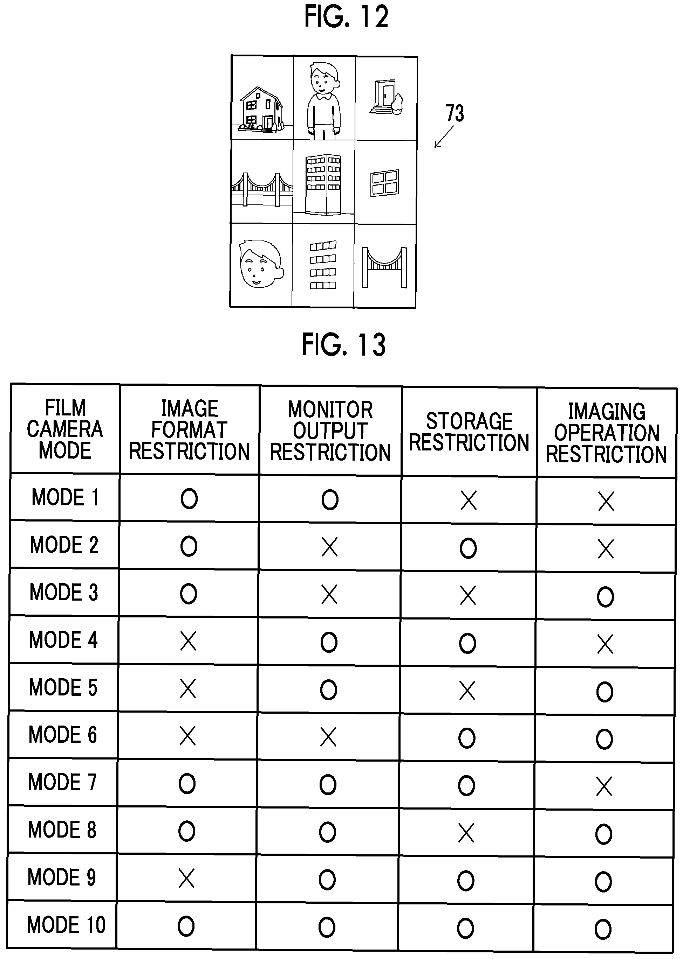

Fig. 12 is a descriptive diagram illustrating a thumbnail image diagram.
Fig. 13 is a table showing modes 1 to 10 of the film camera mode.

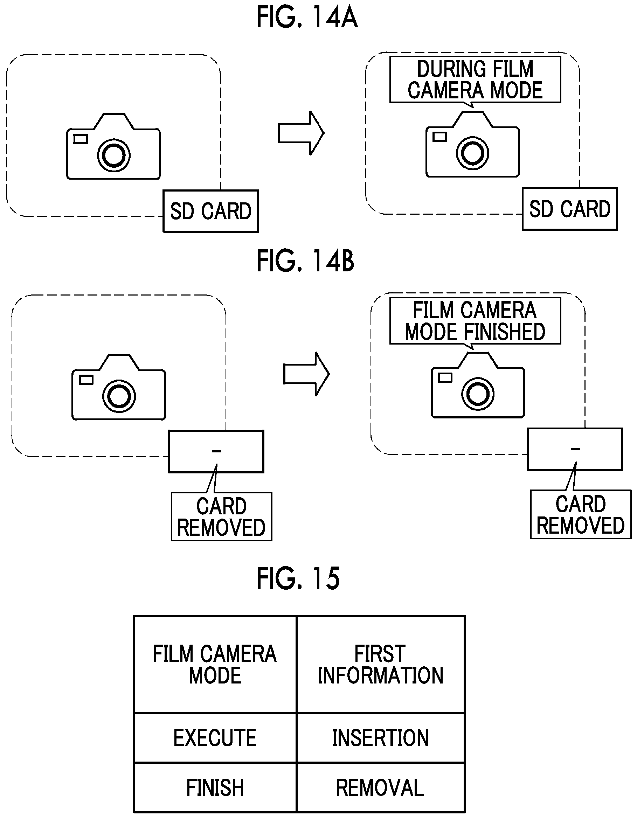

Fig. 14A is a descriptive diagram illustrating a case where the film camera mode is executed, and Fig. 14B is a descriptive diagram illustrating a case where the film camera mode is finished.
Fig. 15 is a table showing a case of executing the film camera mode and a case of finishing the film camera mode based on first information.

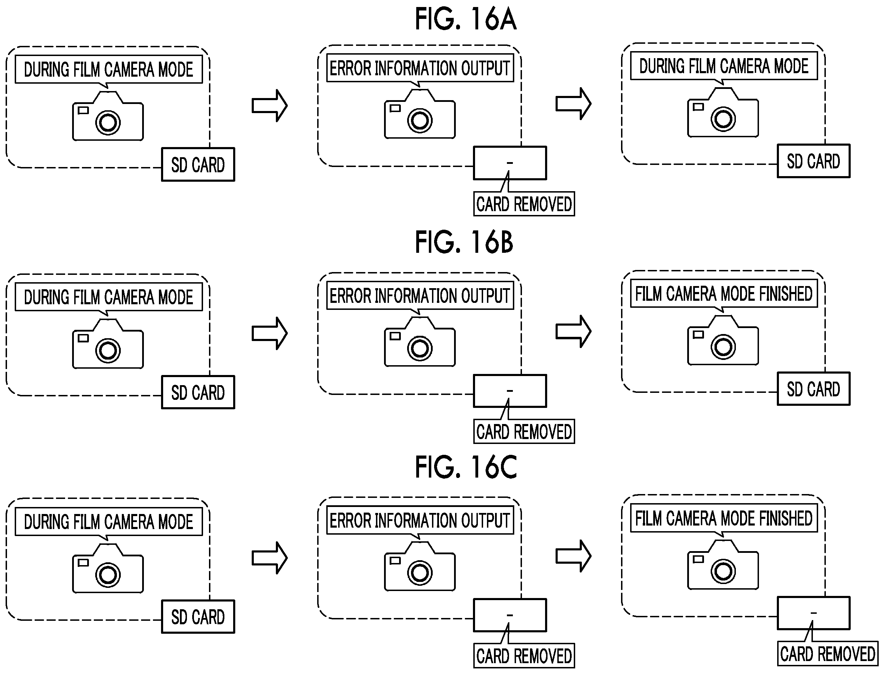

Fig. 16A is a descriptive diagram illustrating a case of continuing the film camera mode after outputting error information, and Figs. 16B and 16C are descriptive diagrams illustrating a case of finishing the film camera mode after outputting the error information.

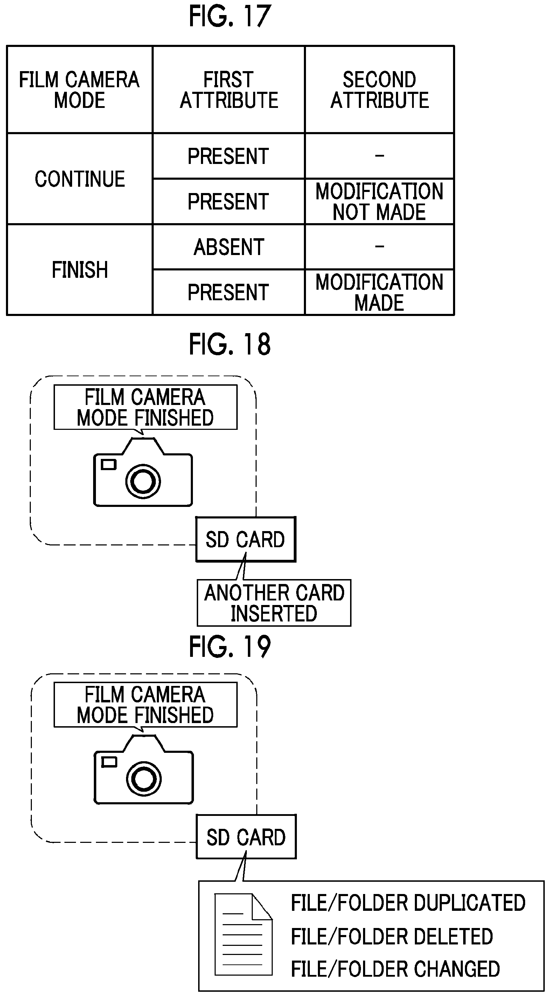

Fig. 17 is a table showing a case of continuing the film camera mode and a case of finishing the film camera mode based on first and second attributes.
Fig. 18 is a descriptive diagram illustrating a case of finishing the film camera mode because of insertion of another memory card.
Fig. 19 is a descriptive diagram illustrating a case of finishing the film camera mode because of duplication or the like of a file or the like in a memory card.

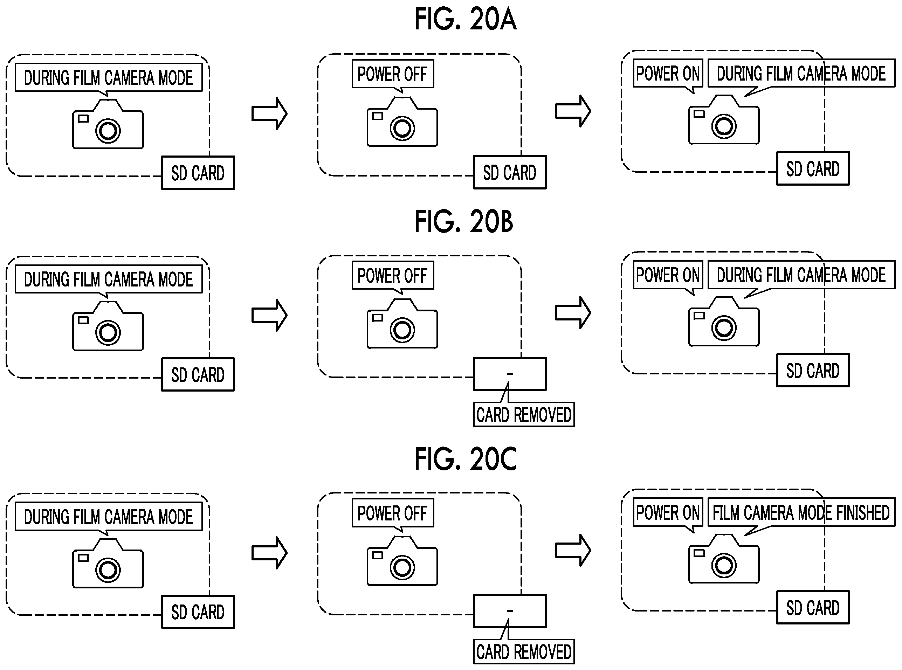

Figs. 20A and 20B are descriptive diagrams illustrating a case of continuing the film camera mode in a case where the imaging apparatus is powered on again, and Fig. 20C is a descriptive diagram illustrating a case of finishing the film camera mode in a case where a reboot is performed.

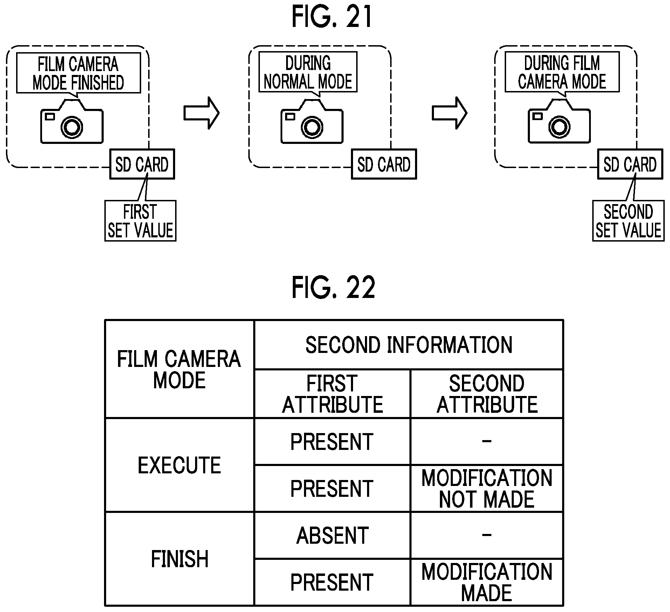

Fig. 21 is a descriptive diagram illustrating an initialization method.
Fig. 22 is a table showing a case of executing the film camera mode and a case of finishing the film camera mode based on the first and second attributes.

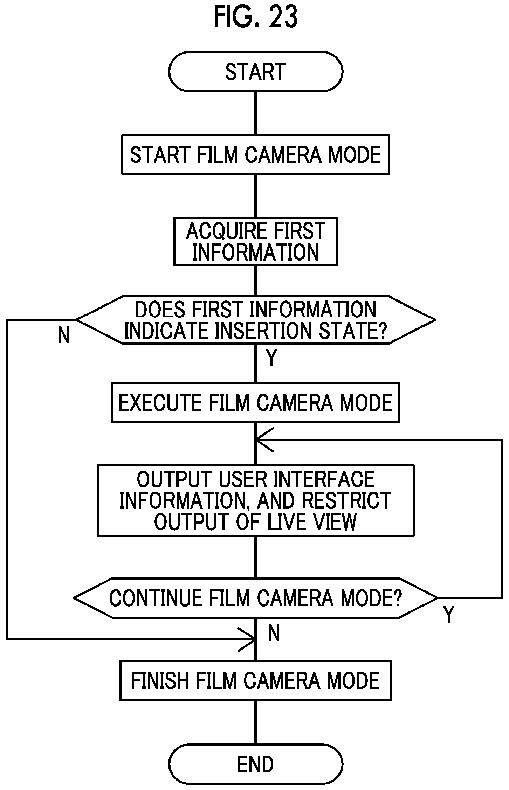

Fig. 23 is a flowchart illustrating a series of flows of the film camera mode.

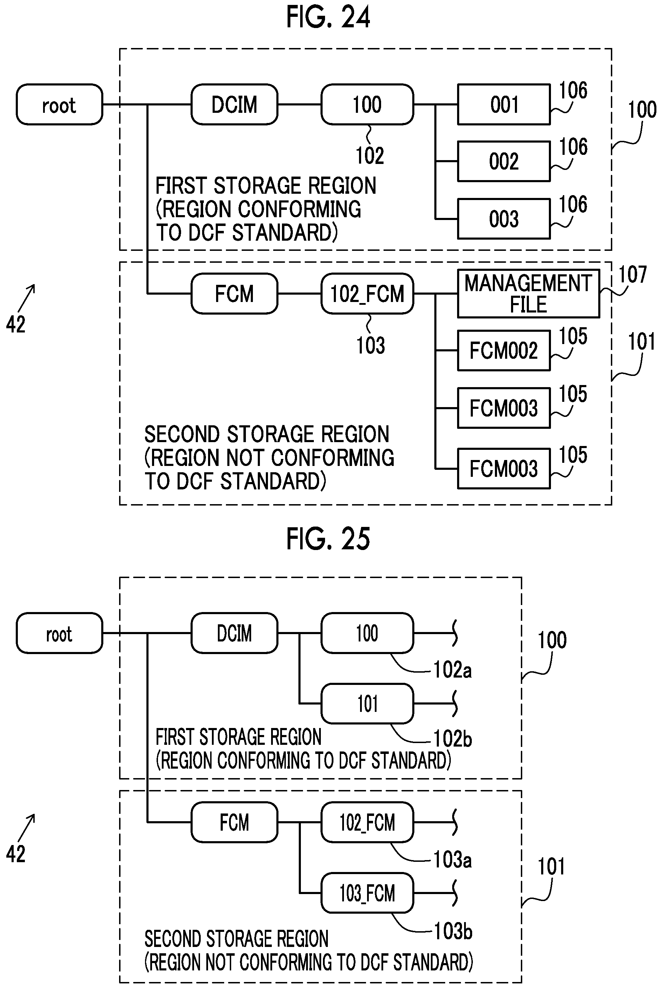

Fig. 24 is a descriptive diagram illustrating a first storage region and a second storage region provided in the memory card.
Fig. 25 is a descriptive diagram illustrating a method of generating a first directory and a second directory.

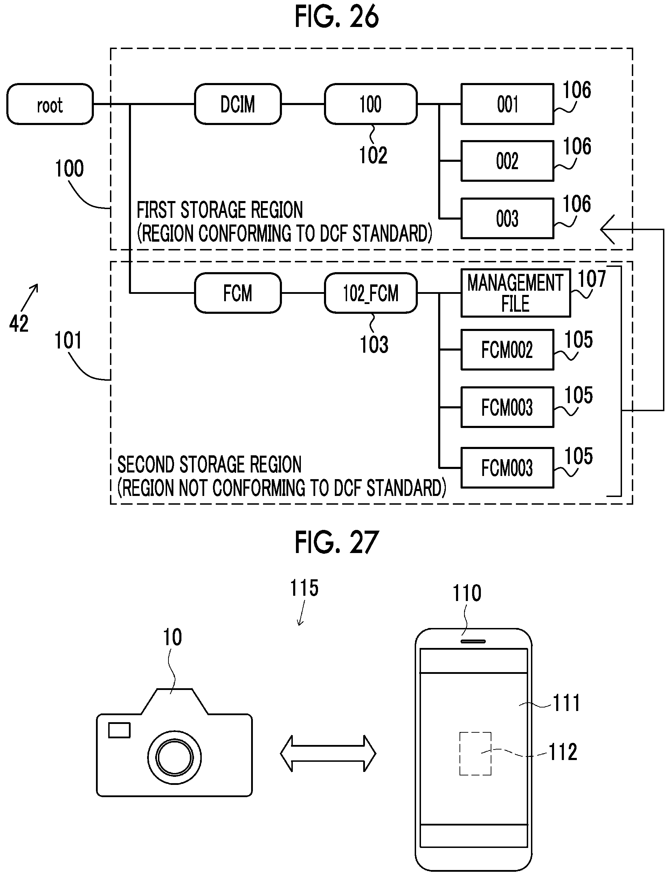

Fig. 26 is a descriptive diagram illustrating movement of image data stored in the second storage region to the first storage region.
Fig. 27 is a conceptual diagram illustrating an imaging system.

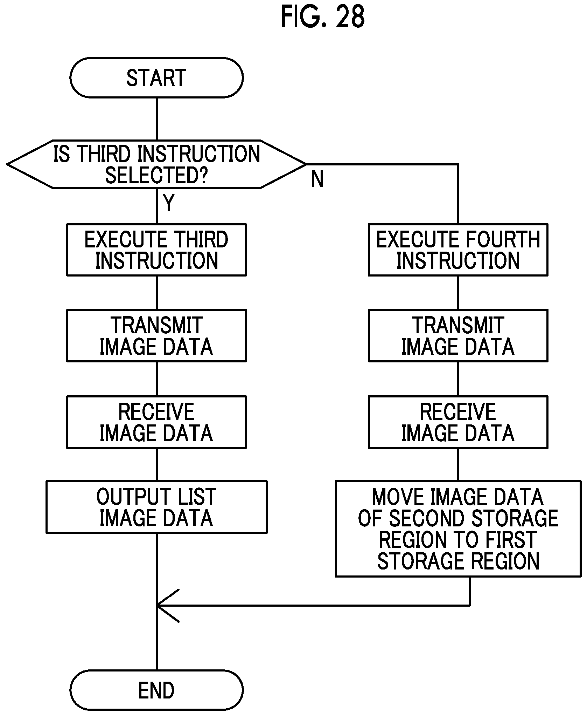

Fig. 28 is a flowchart illustrating a series of flows of processing based on a third instruction or a fourth instruction.

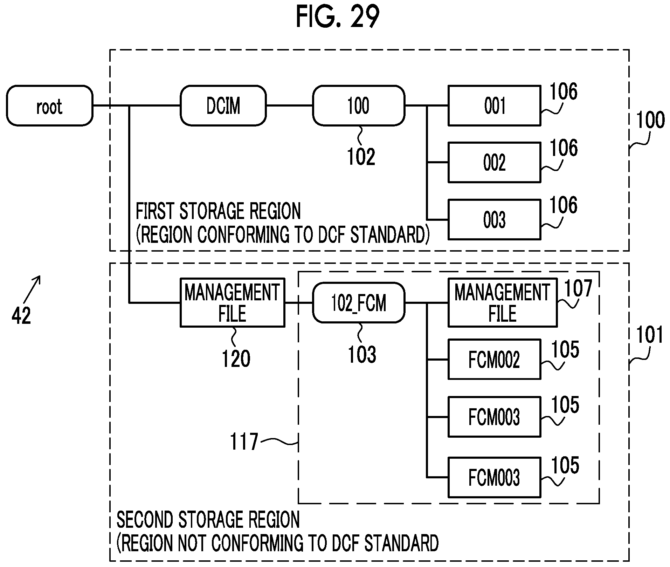

Fig. 29 is a descriptive diagram illustrating a method of storing image data on which invisibility processing or encryption processing is performed.

### DESCRIPTION OF THE PREFERRED EMBODIMENTS

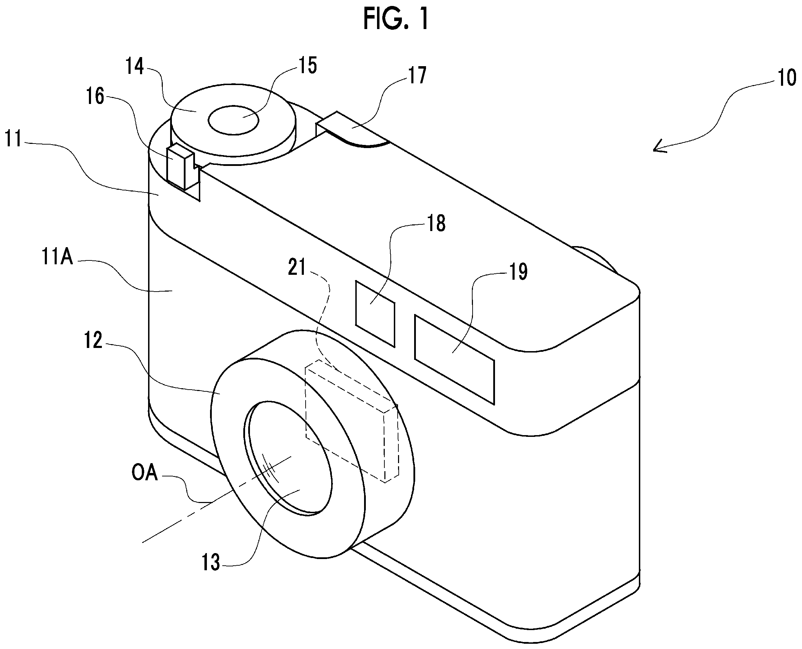

As illustrated in Fig. 1, an imaging apparatus 10 comprises a camera body 11 and a lens barrel 12. The camera body 11 has a horizontally elongated box shape of which a dimension in a left-to-right direction is larger than a dimension in an up-to-down direction in a front view. The imaging apparatus 10 is preferably a digital camera or the like.

The camera body 11 is provided with a grip 11A in its end part on a left side in the front view. The grip 11A has a semi-cylindrical shape connecting a front surface and a rear surface of the camera body 11 and has a shape easily held by a user. The lens barrel 12 is disposed on the front surface of the camera body 11 and is provided with an imaging optical system 13. The imaging optical system 13 forms an image of subject light on an imaging element 21 provided on an optical axis OA.

A mode dial 14, a release switch 15, a power switch 16, a lever 17, and the like are provided on an upper surface of the camera body 11. The mode dial 14 is used for switching an exposure level and the like in a stepwise manner. Not only the lens barrel 12 but also a flash device 18 and an illumination device 19 are provided on the front surface of the camera body 11. The flash device 18 irradiates a subject with illumination light in a case where an exposure value of the subject is less than a certain value, or in a forced manner in line with a shutter release in a case where the imaging apparatus 10 is in a still image capturing mode. Meanwhile, the illumination device 19 constantly irradiates the subject with the illumination light in a case where the imaging apparatus 10 is in a video capturing mode.

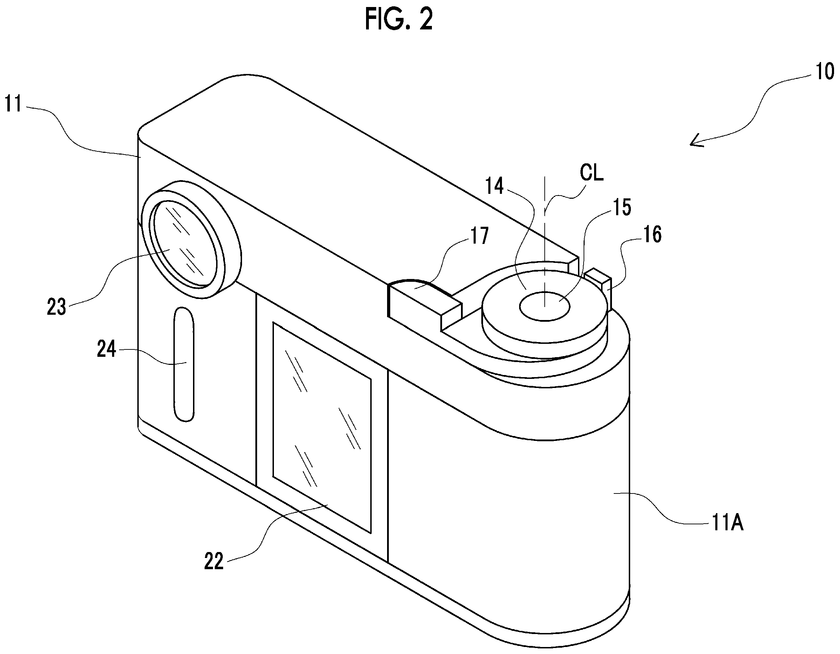

As illustrated in Fig. 2, the lever 17 is provided above the grip 11A. The lever 17 is provided by stacking the mode dial 14 and the release switch 15. The lever 17 is attached to be rotatable about a central axis CL of the mode dial 14. The user can perform a rotation operation on the lever 17, and details of the rotation operation will be described later.

The power switch 16 is a push-type switch and is disposed near the mode dial 14 and the lever 17. A power on/off state of the imaging apparatus 10 is alternately switched in response to pushing of the power switch 16.

The camera body 11 incorporates the imaging element 21 (see Fig. 3). The imaging element 21 is held by a holder (not illustrated) and is fixed to the lens barrel 12 on an image plane side. The imaging element 21 has a still image and video capturing function and is, for example, a complementary metal oxide semiconductor (CMOS) image sensor, a charge coupled device (CCD) image sensor, or an organic thin film imaging element. The imaging element 21 is an imaging element of which a length in a vertical direction is smaller than a length in a horizontal direction in a case where the imaging element is laterally placed, that is, the upper surface of the camera body 11 faces upward in the vertical direction. The imaging element 21 is not limited to this and may be an imaging element of which a length in the vertical direction is larger than a length in the horizontal direction in a case where the imaging element is laterally placed, that is, the upper surface of the camera body 11 faces upward in the vertical direction.

A display 22 (a first monitor portion), an electronic view finder 23, and a sub-display 24 are provided on the rear surface of the camera body 11. The display 22 is a liquid crystal display (LCD), an organic electroluminescent display (OELD), or the like and is composed of a touch screen on which the user can perform a touch operation. The display 22 is used for live view display, recorded image display, setting menu display, and the like. In the live view display, a recorded image obtained by imaging the subject via the imaging element 21 is displayed in real time on the display 22.

The sub-display 24 displays information related to quality of the image such as color and is composed of a touch screen on which the user can perform the touch operation, like the display 22. While the display 22 corresponds to a monitor portion in the claims, the monitor portion may include the electronic view finder 23 or the sub-display 24.

The electronic view finder 23 is provided in an upper portion of the camera body 11. The electronic view finder 23 displays a live view and displays the recorded image obtained by the imaging the subject via the imaging element 21 in real time. The electronic view finder 23 can be turned on and off, as necessary, and is switched to the display on the display 22.

Hereinafter, the rotation operation of the lever 17 will be described. As illustrated in (A) of Fig. 3, in a case where the power switch 16 is off, a locking mechanism (not illustrated) restricts rotation of the lever 17, and the lever 17 is locked in a posture along the rear surface of the camera body 11. The posture along the rear surface of the camera body 11 means that the lever 17 is at a position at which the lever 17 does not protrude from the rear surface of the camera body 11 in a state seen from above the camera body 11.

As illustrated in (B) of Fig. 3, in a case where the power switch 16 is switched on from off, restriction of the rotation of the lever 17 is released, and the lever 17 is set to a normal position at which the lever 17 is slightly rotated counterclockwise from the rear surface of the camera body 11. The lever 17 is set to a state of the normal position unless the user operates the lever 17. As illustrated in (C) of Fig. 3, a winding operation of performing a rotation operation of the lever 17 in a counterclockwise direction from the normal position can be performed on the lever 17. This rotation operation is used for unlocking a lock on the imaging operation in a film camera mode (unlocking of the lock on the imaging operation will be described later).

Specifically, in the winding operation of the lever 17, the user moves the lever 17 in the counterclockwise direction by hooking a finger on the lever 17, and the lever 17 is rotated. In a case where the finger hooked on the lever 17 is released when the lever 17 is rotated by a certain rotation angle, the lever 17 biased by a spring or the like automatically rotates clockwise and returns to the normal position. Accordingly, the winding operation is completed.

Hereinafter, an electric configuration of the imaging apparatus 10 will be described. As illustrated in Fig. 4, a controller 31 consists of a microcomputer comprising a CPU, a read only memory (ROM) in which a program and a parameter used by the CPU are recorded, a random access memory (RAM) used as a work memory of the CPU, and the like (none illustrated) and functions as a first processor that controls each unit of the imaging apparatus 10.

In a case where the rotation operation is performed on the lever 17, a signal for detecting an amount of rotation is transmitted to the controller 31. A mode switching signal from the mode dial 14, a release signal from the release switch 15, and a power on/off signal from the power switch 16 are input into the controller 31.

A shutter unit 32 is, for example, a focal plane shutter and is disposed between the imaging optical system 13 and the imaging element 21. The shutter unit 32 is provided to be capable of shielding an optical path between the imaging optical system 13 and the imaging element 21 and changes between an open state and a closed state. The shutter unit 32 is driven by a shutter motor 33. Driving of the shutter motor 33 is controlled by a motor driver 34.

The shutter unit 32 changes to the open state when live view images and videos are captured. In still image capturing, the shutter unit 32 is changeable to the closed state from the open state in a case where the release switch 15 is not operated, and is changeable to the open state from the closed state in a case where the release switch 15 is operated. The shutter unit 32 operates in the same manner as in video capturing in capturing a preview image in the video capturing mode, and as in the still image capturing in capturing a preview image in the still image capturing mode.

Driving of the imaging element 21 is controlled by the controller 31. The imaging element 21 includes a light-receiving surface composed of a plurality of pixels (not illustrated) arranged in a two-dimensional matrix. Each pixel includes a photoelectric conversion element and generates an imaging signal by photoelectrically converting a subject image formed on the light-receiving surface by the imaging optical system 13.

The imaging element 21 comprises signal processing circuits such as a noise removal circuit, an auto gain controller, and an A/D conversion circuit (none illustrated). The noise removal circuit performs noise removal processing on the imaging signal. The auto gain controller amplifies a level of the imaging signal to an optimal value. The A/D conversion circuit converts the imaging signal into a digital signal and outputs the digital signal to a bus line 36 from the imaging element 21. The output signal of the imaging element 21 is image data (so-called RAW data) including one color signal for each pixel.

An image memory 35 stores the image data of one frame output to the bus line 36. An image data processing portion 37 reads out the image data of one frame from the image memory 35 and performs well-known image processing such as a matrix operation, demosaicing, γ correction, brightness and color difference conversion, and resizing processing.

A display driver 38 sequentially inputs the image data of one frame on which the image processing is performed by the image data processing portion 37, into the display 22 or the electronic view finder 23. For example, the display 22 sequentially displays the live view image in a certain period. The touch operation can be performed on the display 22. By performing the touch operation on an operation icon (not illustrated) or the like displayed on the display 22, an operation and selection corresponding to the operation icon are executed.

A card interface (I/F) 41 is incorporated in a card slot (not illustrated) provided in the camera body 11 and is electrically connected to a memory card 42 inserted into the card slot. The memory card 42 can be inserted into and removed from the card slot by the user. Specifically, the card I/F 41 stores the image data on which the image processing is performed by the image data processing portion 37, in the memory card 42. In reproducing and displaying the image data stored in the memory card 42, the card I/F 41 reads out the image data from the memory card 42. An image recording portion is not limited to a configuration of performing recording on a recording medium such as a memory card and may be a storage device such as a solid state drive (SSD).

The imaging apparatus 10 comprises a plurality of imaging modes such as a normal mode (a second imaging mode) and the film camera mode (a first imaging mode). The normal mode includes the still image capturing mode, the video capturing mode, and the like. The film camera mode is a mode in which image formats are restricted, and is a mode in which an analog feel of a film camera is experienced and reproduced. For switching to the film camera mode from the normal mode, as illustrated in Fig. 5, the display 22 is switched to a screen of the film camera mode illustrated in (B) of Fig. 5 from a screen of the normal mode illustrated in (A) of Fig. 5 by performing the touch operation on the sub-display 24. For switching to the normal mode from the film camera mode, switching to the normal mode from the film camera mode is performed in a case where, for example, a selection is made to finish the film camera mode, or a captured image count reaches a predetermined number in the film camera mode.

In a case where the film camera mode is selected, the controller 31 outputs user interface information related to the imaging to the display 22, and output of the live view to the display 22 is restricted. Specifically, as illustrated in Fig. 6, a display region of the display 22 displays a touch operation disabled region 50 in which the user cannot perform the touch operation, such as the captured image count as the user interface information related to the imaging, and a touch operation enabled region 51 in which the user can perform the touch operation, such as manual focus. Restriction of the output of the live view to the display 22 includes not displaying the live view image on the display 22 during the film camera mode, unlike in the normal mode. In the film camera mode, it is preferable to restrict and not display videos among the image formats on the display 22.

Here, "PROVIA" displayed on the sub-display 24 is one type of film simulation that is function enabling color development and contrast to be changed as in the case of switching a film of a camera in accordance with what is intended to be imaged. Switching to a type of film simulation (for example, "VELVIA") other than "PROVIA" can be performed by performing the touch operation on the sub-display 24.

The touch operation disabled region 50 displays a remaining battery capacity display portion 53, an F number display portion 54, a captured image count display portion 55, a remaining capture count display portion 56, a lever state display portion 57, a flash presence or absence display portion 58, and a date display portion 59. The remaining battery capacity display portion 53 displays a remaining battery capacity with vertical lines in a shape representing a battery. More vertical lines mean more remaining battery capacity. The F number display portion 54 displays an F number as a numerical value. The captured image count display portion 55 displays the current captured image count. The remaining capture count display portion 56 displays a remaining capture count that is a predetermined captured image count at the start of the film camera mode. For example, the remaining capture count is preferably set to 72, 36, or 24 in accordance with the remaining capture count of the camera film.

The lever state display portion 57 displays whether or not the winding operation of the lever 17 is performed in the film camera mode. Details of the lever state display portion 57 will be described later. The flash presence or absence display portion 58 displays ON in a case where the flash device 18 is turned ON, and displays OFF in a case where the flash device 18 is turned off. The date display portion 59 displays the current date, and the date being displayed is displayed in a superimposed manner on the image in the film camera mode.

The touch operation enabled region 51 displays an AF/MF switching portion 60, a date ON/OFF switching portion 61, and an MF focal length operator 62. In the AF/MF switching portion 60, a round button portion 60a can be slid in the left-to-right direction. In a case where the round button portion 60a is slid to the left side, switching to auto focus (AF) is performed. In a case where the round button portion 60a is slid to a right side, switching to the manual focus (MF) is performed. The MF focal length operator 62 can be operated by switching to the MF.

In the date ON/OFF switching portion 61, a push operation can be performed on a round button portion 61a, and switching between date ON and date OFF can be performed by performing the push operation on the round button portion 61a. In the case of date ON, a center portion of the round button portion 61a is illuminated, and the date being displayed in the date display portion 59 is displayed in a superimposed manner for each imaging. Meanwhile, in the case of date OFF, the center portion of the round button portion 61a is not illuminated. In this case, the date is not displayed in a superimposed manner even in a case where the imaging is performed.

The MF focal length operator 62 includes a slider 62a, and a focal length is set by performing a sliding operation of the slider 62a in the left-to-right direction. In the MF focal length operator 62, the focal length can be set to "0.3 m", "1 m", "3 m", or "5 m". In the case of "0.3 m", a logo representing an example of focusing on near a face of one person is displayed. In the case of " 1 m", a logo representing an example of focusing on an upper body of one person is displayed. In the case of "3 m", a logo representing an example of focusing on upper bodies of two persons is displayed. In the case of "5 m", a logo representing an example of focusing on a landscape is displayed. By setting the slider 62a to each position of "0.3 m", "1 m", "3 m", and "5 m", the corresponding focal length can be set.

The controller 31 sets a lock on the imaging operation of the release switch 15 (a first member) in the film camera mode and unlocks the lock based on an operation of the lever 17 (a second member). Meanwhile, in a case where the lock is unlocked, the controller 31 outputs information indicating that the imaging operation of the release switch 15 is valid, as the user interface information. In a case where the imaging operation of the release switch 15 is performed, the controller 31 outputs information related to the captured image count as the user interface information. The controller 31 restricts output of the image data after the imaging to the display 22.

Specifically, as illustrated in (A) of Fig. 7, in a case where switching to the film camera mode from the normal mode is performed, the lever state display portion 57 displays "--" indicating that the winding operation of the lever 17 is not performed. The captured image count display portion 55 displays the current captured image count as "0". In this state, the lock is set on the imaging operation of the release switch 15, and acquisition and storage of a still image in the memory card 42 are not performed even in a case where the release switch 15 is operated.

As illustrated in (B) of Fig. 7, by performing the winding operation of the lever 17, the lever state display portion 57 displays "OK" indicating that the winding operation of the lever 17 is performed. The display of "OK" in the lever state display portion 57 represents information indicating that the imaging operation of the release switch 15 is valid. In this state, the lock on the imaging operation of the release switch 15 is unlocked, and acquisition and storage of the still image in the memory card 42 are performed by operating the release switch 15. In a case where the imaging operation is completed, as illustrated in (C) of Fig. 7, the captured image count display portion 55 changes the display of the current captured image count to "1" from "0", and the lever state display portion 57 is restored to the display of "--" again by resetting the winding operation. When the imaging operation is completed, the display 22 maintains the display of the user interface information (the touch operation disabled region and the touch operation enabled region) of the film camera mode and does not display the image data after the imaging.

In a case where the imaging operation is performed while the lock is set on the imaging operation, the controller 31 preferably outputs information indicating that the imaging operation is invalid. Specifically, as illustrated in Fig. 8, it is preferable to turn on and off a warning light emitting diode (LED) 65 provided on the left side of the electronic view finder 23, as the information indicating that the imaging operation is invalid. As illustrated in Fig. 9, it is preferable to flash on and off "--" in the lever state display portion 57, as the information indicating that the imaging operation is invalid.

In a case where a selection to finish the film camera mode is made, the controller 31 preferably stores a series of the image data obtained by the imaging in the memory card 42 (a recording medium) in a single unit format. In a case where the film camera mode is finished, the controller 31 transitions to the normal mode in which the restriction of the output to the display 22 is released.

Specifically, as illustrated in (A) of Fig. 10, in the case of finishing the film camera mode in the middle of the film camera mode, a predetermined touch operation for switching the film camera mode to a finish screen is performed on the sub-display 24. Accordingly, as illustrated in (B) of Fig. 10, a film camera mode finish selection screen 66 is displayed on the display 22. The film camera mode finish selection screen 66 displays a cartridge image 67 representing that the series of the image data obtained by the imaging will be stored in a single unit format, and a finish selection button 68. The film camera mode is finished by performing the touch operation on the finish selection button 68, and the series of the image data obtained by the imaging are stored in the memory card 42 in a single unit format. Accordingly, as illustrated in (C) of Fig. 10, a transition is made to the normal mode. The non-display of the live view on the display 22 is released, and the live view is displayed on the display 22.

In the film camera mode, in a case where the captured image count reaches the predetermined number, the controller 31 preferably invalidates the imaging operation of the release switch 15 and unlocking of the lock on the imaging operation of the lever 17. In the film camera mode, in a case where the captured image count reaches the predetermined number, the controller 31 preferably stores the series of the image data obtained by the imaging in the memory card 42 in a single unit format. In a case where the film camera mode is finished, the controller 31 transitions to the normal mode in which the restriction of the output to the display 22 is released. The predetermined number is output to the display 22 as the remaining capture count that is one type of the user interface information.

Specifically, as illustrated in (A) of Fig. 11, in a case where the captured image count reaches "72" that is the remaining capture count, the lever state display portion 57 displays "OFF" indicating that the imaging operation based on the winding operation of the lever 17 is invalid. Accordingly, the imaging operation of the release switch 15 is also invalidated. After a certain amount of time, the display 22 displays a film camera mode finish screen 70, as illustrated in (B) of Fig. 11. The film camera mode finish screen 70 displays the cartridge image 67 representing that the series of the image data obtained by the imaging will be stored in a single unit format, and a message 71 indicating that the film camera mode is finished. Accordingly, the film camera mode is finished, and the series of the image data obtained by the imaging are stored in the memory card 42 in a single unit format. By performing a tap operation on the display 22, a transition is made to the normal mode, as illustrated in (C) of Fig. 11. The non-display of the live view on the display 22 is released, and the live view is displayed on the display 22.

In the film camera mode, the series of the image data obtained by the imaging are preferably stored in the memory card 42 in a single unit format on which display restriction on the display 22 is imposed. For example, as illustrated in Fig. 12, the series of the image data are stored in the memory card 42 as a thumbnail image group 73 representing each piece of the image data of the captured image count captured so far as a thumbnail. During the film camera mode, since the display restriction on the display 22 is imposed on the thumbnail image group 73, the thumbnail image group 73 is not displayed on the display 22 even in a case where a play button (not illustrated) is operated. Meanwhile, in a case where the film camera mode is finished, the display restriction on the thumbnail image group 73 is released, and the thumbnail image group 73 can be displayed on the display 22.

The film camera mode is preferably a mode in which a digital function of the imaging apparatus 10 is restricted. The controller 31 preferably performs at least two of restriction of the image format, restriction of the output of the live view to the display 22, restriction of the storage of the series of the image data obtained by the imaging in the film camera mode in a format other than the format of a single unit, restriction of the captured image count, and restriction of a second imaging operation following a first imaging operation, as the restriction of the digital function. In the present embodiment, storage in a format other than the format of a single unit (a cartridge image unit) is restricted in the film camera mode. However, in a case where imaging data is captured again in the subsequent film camera mode performed again, the subsequent captured imaging data may be added to the storage data in the format of a single unit obtained in the previous film camera mode.

Specifically, the restriction of the image format preferably allows still images and restricts videos. For the restriction of the output of the live view to the display 22, it is preferable not to display the live view on the display 22. For the restriction of the storage of the series of the image data obtained by the imaging in the film camera mode in a format other than the format of a single unit, it is preferable to prohibit storage in a format other than the thumbnail image group 73. For the restriction of the captured image count, it is preferable to prohibit capturing of the captured image count exceeding the remaining capture count set at the start of the film camera mode. For the restriction of the second imaging operation following the first imaging operation, it is preferable to prohibit consecutive imaging operations of the release switch 15 with respect to the imaging operation of the release switch 15 and, after the first imaging operation is performed, allow the second imaging operation after unlocking the lock on the imaging operation by performing the winding operation of the lever 17.

For the film camera mode, ten patterns of mode 1 to mode 10 can be set as illustrated in Fig. 13. In mode 1 of the film camera mode, two types of restriction including the restriction of the image format (image format restriction) and the restriction of the output of the live view to the display 22 (monitor output restriction) are performed. In mode 2 of the film camera mode, two types of restriction including the image format restriction and the restriction of the storage of the series of the image data obtained by the imaging in the film camera mode in a format other than the format of a single unit (storage restriction) are performed. In mode 3 of the film camera mode, it is preferable to perform two types of restriction including the image format restriction and the restriction of the second imaging operation following the first imaging operation (imaging operation restriction).

In mode 4 of the film camera mode, it is preferable to perform two types of restriction including the monitor output restriction and the storage restriction. In mode 5 of the film camera mode, it is preferable to perform two types of restriction including the monitor output restriction and the imaging operation restriction. In mode 6 of the film camera mode, it is preferable to perform two types of restriction including the storage restriction and the imaging operation restriction. In mode 7 of the film camera mode, it is preferable to perform three types of restriction including the image format restriction, the monitor output restriction, and the storage restriction. In mode 8 of the film camera mode, it is preferable to perform three types of restriction including the image format restriction, the monitor output restriction, and the imaging operation restriction. In mode 9 of the film camera mode, it is preferable to perform three types of restriction including the monitor output restriction, the storage restriction, and the imaging operation restriction. In mode 10 of the film camera mode, it is preferable to perform four types of restriction including the image format restriction, the monitor output restriction, the storage restriction, and the imaging operation restriction.

As described above, in the film camera mode, since the captured image cannot be immediately checked, fun such as "expectation based on not knowing a result until development" or "experience of obtaining an image different from an expected result" that is a feature of the film camera can be achieved. Since some users still buy new film cameras, and new film cameras continue to sell on the market, providing the film camera mode sufficiently meets market demand and desire of a user who prefers an imaging experience of the film camera and wants to continue using film cameras.

The controller 31 controls execution, continuation, and finish of the film camera mode (the first imaging mode). The controller 31 acquires first information related to insertion and removal of the memory card 42 (the recording medium) in which the imaging data of the imaging apparatus 10 is recorded, and restricts the film camera mode related to the function of the imaging apparatus 10 based on the first information. The first information is preferably information including a state of the insertion and removal of the memory card 42. While the restriction of the film camera mode is the finish of the film camera mode in the present embodiment, the restriction of the film camera mode also includes a case of pausing only a part of the functions of the film camera mode and executing the rest.

Specifically, in a case where the film camera mode is started, the controller 31 preferably performs a first control that is control of any of executing the film camera mode or restricting the film camera mode, based on the first information. The film camera mode is started by performing the touch operation on the sub-display 24, as described above. As illustrated in Fig. 14A, the controller 31 executes the film camera mode in a case where the first information indicates an insertion state of the memory card 42 (see Fig. 15). Meanwhile, as illustrated in Fig. 14B, the film camera mode is finished in a case where the first information indicates a removal state of the memory card 42 (see Fig. 15).

Here, in Figs. 14A and 14B, a state where a rectangular solid line box includes "SD card" represents the insertion state of the memory card 42, and a state where a rectangular solid line box includes "-" represents the removal state of the memory card 42. A figure of a camera represents the imaging apparatus 10. The insertion state or the removal state and the representation of the camera are the same in other drawings. While examples of the memory card 42 include an SD card in the present embodiment, other recording media (such as a USB memory) may be used.

Next, in a case where the film camera mode is executed, the controller 31 preferably outputs error information based on the first information. For example, the error information may be displayed on the display 22 or may be provided by voice or the like. After the error information is output, the controller 31 preferably performs a second control that is a control of any of continuing the film camera mode or restricting the film camera mode, based on the first information.

Specifically, as illustrated in each of Figs. 16A, 16B, and 16C, in a case where the first information is changed to the removal state from the insertion state during the film camera mode, the imaging apparatus 10 outputs the error information. After the error information is output, as illustrated in Figs. 16A and 16B, in a case where the first information is changed to the insertion state by inserting the memory card 42, a control of any of continuing the film camera mode or finishing the film camera mode is performed. Meanwhile, as illustrated in Fig. 16C, in a case where the memory card 42 is not inserted and the first information is maintained as the removal state even after an elapse of a certain amount of time, a control of finishing the film camera mode is performed.

As the control performed after the error information is output, in a case where the first information is changed to the insertion state, the controller 31 preferably determines the presence or absence of a first attribute assigned to the memory card 42 by executing the film camera mode. As illustrated in Fig. 17, in a case where the first attribute is present, the film camera mode is continued (see Fig. 16A). In a case where the first attribute is absent, the film camera mode is finished (see Fig. 16B). For example, a case where the first attribute is absent is a case where the memory card 42 that is inserted again is a card different from the memory card 42 before insertion, as illustrated in Fig. 18.

The first attribute is created in the memory card 42 at the first start of the film camera mode as a management file (see a management file 107 in Fig. 24). The management file includes not only the first attribute but also a second attribute (described later). The management file preferably includes a start date and time and a finish date and time of the film camera mode, the remaining capture count at the start of the film camera mode, a memory card capacity at the start of the film camera mode, a film simulation/filter setting during the film camera mode, and the like.

As the control performed after the error information is output, in a case where the first information is changed to the insertion state, the controller 31 preferably determines the presence or absence of the first attribute. As illustrated in Fig. 17, in a case where the first attribute is present and an external change is not made to the second attribute assigned to data of the memory card 42 in association with a history record (a modification is not made), the film camera mode is continued (see Fig. 16A). Meanwhile, in a case where the first attribute is present and an external change is made to the second attribute (a modification is made), the film camera mode is finished (see Fig. 16B). For example, a case where an external change is made to the second attribute means that duplication, deletion, change, or the like of a file/folder is performed in the memory card 42, as illustrated in Fig. 19.

As a method of determining whether or not an external change is made, for example, in a case where a capacity obtained by subtracting an image data capacity of the captured image count captured so far from the memory card capacity at the start of the film camera mode, which is one type of the second attribute, falls within a predetermined range as a card capacity of the memory card 42 after being inserted again, it is preferable to determine that a modification is not made. In a case where the capacity does not fall within the predetermined range, it is preferable to determine that a modification is made.

Examples of continuing the film camera mode after the error information is output include
▪ a case where the memory card 42 that is removed is inserted without manipulating the data and the like, and
▪ a case where the memory card 42 in which a part of image files other than those in the current film camera mode is deleted is inserted.

Meanwhile, examples of finishing the film camera mode after the error information is output include
▪ a case where the memory card 42 in which a part of image files being captured in the current film camera mode is deleted is inserted,
▪ a case where another memory card 42 of which only an overall folder configuration is the same as that of the memory card 42 is inserted,
▪ a case where the memory card 42 in which some files are written is inserted,
▪ a case where the memory card 42 in which the management file is deleted is inserted,
▪ a case where the memory card 42 in which all image files are deleted is inserted,
▪ a case where another memory card 42 is inserted,
▪ a case where a cloned memory card 42 is inserted,
▪ a case where the same memory card 42 is set to be protected and inserted,
▪ a case where the memory card 42 used in another imaging apparatus is inserted (a case where the memory card capacity is smaller than that during the imaging), and
▪ a case where the memory card 42 is replaced with the memory card 42 being used in the film camera mode in another imaging apparatus.

In a case where the film camera mode is executed, and the imaging apparatus 10 is powered off and then, is powered on, the controller 31 preferably performs a third control that is a control of any of continuing the film camera mode or restricting the film camera mode, based on the first information.

Specifically, as illustrated in each of Figs. 20A, 20B, and 20C, in a case where the imaging apparatus 10 is powered OFF during the film camera mode, and the same memory card 42 remains inserted and the insertion state is maintained in the first information until the imaging apparatus 10 is powered ON again, as illustrated in Fig. 20A, the film camera mode continues. As illustrated in Figs. 20B and 20C, in a case where the memory card 42 is removed after the imaging apparatus 10 is powered OFF and then, is powered ON, and the memory card 42 is inserted and the first information is changed to the removal state from the insertion state, the controller 31 performs a control of any of continuing the film camera mode or restricting the film camera mode.

As the control in a case where the imaging apparatus 10 is powered on again, in a case where the imaging apparatus 10 is powered off and then, is powered on again, the controller 31 preferably determines the presence or absence of the first attribute. As illustrated in Fig. 17, in a case where the first attribute is present, the film camera mode is continued (see Fig. 20B). In a case where the first attribute is absent, the film camera mode is finished (see Fig. 20C).

As the control in a case where the imaging apparatus 10 is powered on again, in a case where the imaging apparatus 10 is powered off and then, is powered on again, the controller 31 preferably determines the presence or absence of the first attribute. As illustrated in Fig. 17, in a case where the first attribute is present and an external change is not made to the second attribute (a modification is not made), the film camera mode is continued (see Fig. 20B). Meanwhile, in a case where the first attribute is present and an external change is made to the second attribute (a modification is made), the film camera mode is finished (see Fig. 20C).

Examples of continuing the film camera mode in a case where the imaging apparatus 10 is powered OFF during the film camera mode include
▪ a case where the memory card 42 is removed, and then the removed memory card 42 is inserted without manipulating the data and the like and the imaging apparatus 10 is powered ON, and
▪ a case where the memory card 42 is removed, and then the memory card 42 in which a part of image files other than those in the current film camera mode is deleted is inserted and the imaging apparatus 10 is powered ON.

Meanwhile, examples of finishing the film camera mode in a case where the imaging apparatus 10 is powered OFF during the film camera mode and the memory card 42 is removed include
▪ a case where the memory card 42 in which a part of image files being captured in the current film camera mode is deleted is inserted, and the imaging apparatus 10 is powered ON,
▪ a case where another memory card 42 of which only an overall folder configuration is the same as that of the memory card 42 is inserted, and the imaging apparatus 10 is powered ON,
▪ a case where the memory card 42 in which some files are written is inserted, and the imaging apparatus 10 is powered ON,
▪ a case where the memory card 42 in which the management file is deleted is inserted, and the imaging apparatus 10 is powered ON,
▪ a case where the memory card 42 in which all image files are deleted is inserted, and the imaging apparatus 10 is powered ON,
▪ a case where another memory card 42 is inserted, and the imaging apparatus 10 is powered ON,
▪ a case where a cloned memory card 42 is inserted, and the imaging apparatus 10 is powered ON,
▪ a case where the same memory card 42 is set to be protected and inserted, and the imaging apparatus 10 is powered ON,
▪ a case where the imaging apparatus 10 is powered ON without inserting the memory card 42,
▪ a case where the same memory card 42 is inserted after powering the imaging apparatus 10 ON,
▪ a case where the memory card 42 used in another imaging apparatus is inserted, and the imaging apparatus 10 is powered ON (a case where the memory card capacity is smaller than that during the imaging), and
▪ a case where the memory card 42 is replaced with the memory card 42 being used in the film camera mode in another imaging apparatus, and the imaging apparatus 10 is powered ON.

It is also preferable to finish the film camera mode in a case where the battery is removed without powering the imaging apparatus 10 OFF in the film camera mode.

Next, in a case where the film camera mode is finished, the controller 31 preferably performs initialization related to the film camera mode. As illustrated in Fig. 21, the initialization is preferably processing of preventing a first set value set in first imaging in the film camera mode from being used as a second set value set in second imaging that is imaging in the subsequent film camera mode. By performing the initialization, the set value used in the previous film camera mode is not carried over (reset) in the subsequent film camera mode. Here, for example, the first set value or the second set value is the remaining capture count, a pattern of the film simulation, the exposure level set using the mode dial 14, and the F number. In a case where the film camera mode is finished, the normal mode is automatically executed (see Figs. 10 and 11). Thus, a new start operation is necessary to start the subsequent film camera mode.

Execution and finish of the film camera mode may be controlled based on information different from the first information. In a case where the memory card 42 is inserted, the controller 31 may acquire second information related to an attribute of the memory card 42 and restrict the film camera mode based on the second information. Specifically, the attribute preferably includes any of the first attribute assigned to the memory card 42 by executing the film camera mode or the second attribute assigned to the data of the memory card 42 in association with the history record. The first attribute and the second attribute are the same as described above.

As illustrated in Fig. 22, in a case where the first attribute is present with respect to the second information, or in a case where the first attribute is present and the second attribute is not modified with respect to the second information, the film camera mode is executed in a case where the memory card 42 is inserted. Meanwhile, in a case where the first attribute is absent with respect to the second information, or in a case where the first attribute is present and the second attribute is modified with respect to the second information, the film camera mode is finished.

Next, an imaging method according to the embodiment of the present invention will be described with reference to the flowchart in Fig. 23. The film camera mode is started by causing the user to perform the touch operation on the sub-display 24. The film camera mode is an imaging mode in which the image format is restricted. The controller 31 acquires the first information related to insertion and removal of the memory card 42 in which the imaging data of the imaging apparatus 10 is recorded, and performs a step of restricting the film camera mode based on the first information. In the film camera mode restriction step, in a case where the first information indicates the insertion state of the memory card 42, the controller 31 executes the film camera mode. Meanwhile, in a case where the first information indicates the removal state of the memory card 42, the controller 31 finishes the film camera mode.

In a case where the film camera mode is executed (selected), a step of outputting the user interface information related to the imaging to the display 22 and restricting the output of the live view to the display 22 is performed. The display of the user interface information and the restriction of the output of the live view continue during the film camera mode. In a case where the film camera mode is finished, switching to the normal mode from the film camera mode is performed. By switching to the normal mode, the live view is displayed on the display 22.

In the imaging method according to the embodiment of the present invention, it is preferable to perform a step of storing, in the film camera mode, the series of the image data obtained by the imaging in a second storage region of the memory card 42 in which a first storage region 100 conforming to the DCF standard and a second storage region 101 not conforming to the DCF standard are generated.

An imaging program according to the embodiment of the present invention is a program causing the controller 31 to execute a function of outputting the user interface information related to the imaging to the display 22 and restricting the output of the live view to the display 22. It is preferable that the imaging program according to the embodiment of the present invention is installed on the imaging apparatus 10 at the time of manufacturing or the like of the imaging apparatus 10 or is installed on the imaging apparatus 10 through a network or the like after the imaging apparatus 10 is shipped.

In the imaging program according to the embodiment of the present invention, it is preferable that the controller 31 also executes a function of storing, in the film camera mode, the series of the image data obtained by the imaging in the second storage region of the memory card 42 in which the first storage region 100 conforming to the DCF standard and the second storage region 101 not conforming to the DCF standard are generated.

In the film camera mode, in order to restrict the display on the display 22, the storage of the series of image data obtained by the imaging in the film camera mode is performed using a different method from the storage in the normal mode. As illustrated in Fig. 24, in the film camera mode, the controller 31 stores the series of the image data obtained by the imaging in the second storage region 101 of the memory card 42 in which the first storage region 100 conforming to the DCF standard and the second storage region 101 non-conforming to the DCF standard are generated. Accordingly, the image data in the film camera mode is not displayed on the display 22. It is preferable that the format of the image data to be stored is a general image format and is a format that can be acquired and viewed on both of a dedicated application and a general-purpose apparatus.

Specifically, in the film camera mode, the controller 31 stores a series of image data 105 obtained by the imaging in a second directory 103 that is generated in the second storage region 101 and does not conform to the DCF standard. A filename of the image data stored in the second directory 103 is preferably set to have a number representing an imaging order and an indicator (for example, FCM) of the film camera mode (in Fig. 24, FCM001, FCM002, FCM003, ...). A management file 107 in which information related to the image data is recorded is generated in the second directory 103. As described above, the management file 107 is used for, for example, determining whether or not to restore the film camera mode in a case where the memory card 42 is inserted or removed during the film camera mode.

Meanwhile, the controller 31 stores image data 106 obtained in the normal mode in a first directory 102 of the first storage region 100. A filename of the image data stored in the first directory 102 is preferably set to have the number representing the imaging order (in Fig. 24, 001, 002, 003, ...).

Each time the film camera mode is selected, the controller 31 generates the second directory 103 in the second storage region 101. Similarly, each time the normal mode is selected, the controller 31 generates the first directory 102 in the first storage region 100. The first directory 102 and the second directory 103 can be distinguished from each other. Thus, the first directory 102 and the second directory 103 are hierarchized in accordance with the same rule. Specifically, for directory numbers of the first directory 102 and the second directory 103, each time a mode of any of the normal mode or the film camera mode is selected, a new number is issued to avoid overlap with an already issued directory number. The second storage region 101 may be hierarchized in accordance with the same rule as the first storage region 100 or may conform to a unique directory structure and a unique naming rule. Alternatively, a part of the directory structure and the naming rule of the DCF standard may be applied.

For example, in a case where an initial selection is made in the order of the normal mode, the normal mode, the film camera mode, and the film camera mode, a first directory 102a to which a number "100" is issued is generated, and then a first directory 102b to which a number "101" is issued is generated in the first storage region 100, as illustrated in Fig. 25. Then, a second directory 103a to which a number "102" is issued is generated, and then a second directory 103b to which a number "103" is issued is generated in the second storage region 101. As described above, each directory has a different number and thus, can be distinguished. Even in a case where the second directory 103 is moved to the first storage region 100, overwriting or the like does not occur because the second directory 103 does not overlap with the first directory 102 already in the first storage region 100.

In a case where the controller 31 acquires a first instruction, the controller 31 enables the image data stored in the second storage region 101 to be displayed on the display 22 based on the first instruction. The first instruction is preferably a finish instruction of the film camera mode. Accordingly, the controller 31 outputs an image of list image data in which thumbnail images of the image data are listed, to the display 22. The list image data is preferably the thumbnail image group 73 (see Fig. 12). The first instruction may be not only an instruction from the imaging apparatus 10 but also an instruction from an external apparatus such as an information processing apparatus (see an information processing apparatus 110 in Fig. 27).

As illustrated in Fig. 26, in a case where a second instruction is provided from the external apparatus, the controller 31 moves the image data stored in the second storage region 101 to the first storage region 100 based on the second instruction. The external apparatus is an apparatus other than the imaging apparatus 10 and is an apparatus connected to the imaging apparatus 10 in a wired or wireless manner. For example, the external apparatus is preferably an information processing apparatus (see the information processing apparatus 110 in Fig. 27) such as a smartphone. The second instruction is an instruction for moving the image data of the second storage region 101 to the first storage region 100 in the memory card 42. Accordingly, the image data in the film camera mode can be moved to the first storage region 100 and displayed on the display 22 in accordance with the instruction from the external apparatus, instead of the instruction from the imaging apparatus 10. Processing based on the second instruction includes not only physical movement of the image data but also movement of a configuration such as change of the attribute. The second instruction may be provided to move not only the image data but also the management file 107 to the first storage region 100.

As described above, by storing the image data obtained in the film camera mode, an imaging experience similar to that of the film camera can be achieved by disabling immediate checking of the image during execution of the film camera mode. Meanwhile, after the film camera mode is finished, a user who is constrained in apparatus or environment terms can be provided with checking means for the image by directly referring to the medium via a general-purpose apparatus such as a personal computer without using a dedicated apparatus or a dedicated application that needs a continuous maintenance cost. This can also provide an opportunity to check the image to various users such as a user in a country where a general-purpose operating system for smartphones is not allowed, and a user who owns a smartphone but does not own a personal computer. The image may be checked using not only a general-purpose apparatus but also a dedicated device or a dedicated application, or may also be checked using an apparatus or an application capable of handling a digital image.

As illustrated in Fig. 27, the image data obtained by the imaging in the film camera mode via the imaging apparatus 10 may be transmitted to the information processing apparatus 110 other than the imaging apparatus 10 and displayed. The information processing apparatus 110 is a smartphone or the like, includes a display 111 (a second monitor portion) and a controller 112, and is connected to the imaging apparatus 10 in a wired or wireless manner. The controller 112 has the same function as the controller 31 and is composed of a second processor. The information processing apparatus 110 stores an application program, and the controller 112 executes the application program. As described above, by combining the imaging apparatus 10 with the information processing apparatus 110, an imaging system 115 capable of displaying the image data obtained by the imaging apparatus 10 on the information processing apparatus 110 is constructed. In the case of transmitting the image from the imaging apparatus 10, displaying an effect showing film development on the application of the information processing apparatus 110 during transmission causes the user to recognize transmission processing as development treatment. This can provide an imaging experience of a film camera.

The controller 112 performs any of executing a third instruction for enabling the image data stored in the second storage region 101 to be displayed on the display 111 or executing a fourth instruction for moving the image data stored in the second storage region 101 to the first storage region.

Specifically, as illustrated in the flowchart illustrated in Fig. 28, in a state where the information processing apparatus 110 and the imaging apparatus 10 are connected, in a case where the user selects the third instruction, the image data of the first storage region 100 and the second storage region 101 is transmitted from the imaging apparatus 10 based on the third instruction. The information processing apparatus 110 receives the image data transmitted from the imaging apparatus 10. In a case where the reception of the image data is completed, the controller 112 outputs the list image data in which the thumbnail images of the image data are listed, to the display 111 based on the image data. The list image data is generated based on the image data of the second storage region 101. The list image data is preferably the thumbnail image group 73 (see Fig. 12).

Meanwhile, in a state where the information processing apparatus 110 and the imaging apparatus 10 are connected, in a case where the user executes the fourth instruction, the image data transmitted from the imaging apparatus 10 is received in the same manner as in the third instruction. In a case where the reception of the image data is completed, the controller 112 moves the image data stored in the second storage region 101 to the first storage region 100. Accordingly, the image data obtained in the film camera mode can be displayed on the display 111.

As described above, in the film camera mode, not only the series of the image data obtained by the imaging may be stored in the second storage region 101 of the memory card 42, but also display restriction may be imposed on the image data obtained in the film camera mode. Specifically, as illustrated in Fig. 29, the controller 31 performs specific processing including any of invisibility processing or encryption processing for the memory card 42 on the image data obtained in the film camera mode, stores the image data on which the specific processing is performed in the second storage region 101 of the memory card 42 as specific processing-completed image data information 117, and creates a management file 120 in which information related to the image data is recorded in a case where the image data is stored in the second storage region 101. Examples of the invisibility processing include hidden file processing and storage as RAW data (the image format of the image data stored in the first storage region 100 is preferably JPEG or the like).

The management file 120 includes at least one of the presence or absence of the image data on which the invisibility processing or the encryption processing is performed, information during the imaging, or information for decrypting the image on which the encryption processing is performed. It is preferable that the specific processing-completed image data information 117 also includes information related to the stored second directory 103. While the management file 120 may be stored in the first storage region 100 other than the second storage region 101, the management file 120 is not included in the specific processing-completed image data information 117 because visibility processing or the encryption processing needs to be controlled, and the management file 120 needs to be set to a visible state.

As in the above description, the image data obtained by the imaging in the film camera mode via the imaging apparatus 10 may be transmitted to the information processing apparatus 110 and displayed (see Fig. 27). The controller 112 of the information processing apparatus 110 performs any of executing a fifth instruction for performing the visibility processing on the image data on which the invisibility processing is performed, or executing a sixth instruction for restoring the image data on which the encryption processing is performed, with respect to the image data stored in the second storage region 101.

Specifically, in a state where the information processing apparatus 110 and the imaging apparatus 10 are connected, in a case where the user executes the fifth instruction, the image data of the first storage region 100 and the second storage region 101 is transmitted from the imaging apparatus 10 based on the fifth instruction. The information processing apparatus 110 receives the image data transmitted from the imaging apparatus 10. In a case where the reception of the image data is completed, the controller 112 performs the visibility processing on the image data on which the invisibility processing is performed, and outputs the image to the display 111 based on the image data on which the visibility processing is performed.

In a state where the information processing apparatus 110 and the imaging apparatus 10 are connected, in a case where the user executes the sixth instruction, the image data of the first storage region 100 and the second storage region 101 is transmitted from the imaging apparatus 10 based on the fifth instruction. The information processing apparatus 110 receives the image data transmitted from the imaging apparatus 10. In a case where the reception of the image data is completed, the controller 112 performs decryption processing on the encrypted image data and outputs the image to the display 111 based on the image data on which the decryption processing is performed.

In order to increase a degree of restriction on reproduction of the film camera via the imaging apparatus 10, a method of enabling the user to display the image using any apparatus by reflecting various techniques such as not only storing the image data obtained in the film camera mode in the second storage region 101 but also recording all pieces of the image data in an invisible state, enabling the user to check only the fact that the captured image is present, and enabling the image to be displayed only in a case where a specific apparatus is used may be adopted. As one of such methods, in the present embodiment, the invisibility processing and the encryption processing are performed, and information about the invisibility processing and the like is recorded in the management file so that the information can be managed. Accordingly, since expandability and general-purpose properties can be provided with respect to the storage method in the film camera mode, demand from the user and market trends can be fulfilled without functional obsolescence. Furthermore, a loss of sales opportunities related to a change in specifications can be prevented.

In the present embodiment, each processing is executed by any computer. Any computer may execute those processing via a processor, a program, or a combination thereof. Any computer may be a general-purpose computer, a computer for a specific purpose, a system such as a workstation, or other hardware elements capable of executing a program.

The processor may be composed of one or a plurality of pieces of hardware, and types of hardware are not limited. For example, the processor may be composed of hardware such as a central processing unit (CPU), a micro processing unit (MPU), a programmable logic device such as a field programmable gate array (FPGA), a dedicated circuit for executing specific processing, such as an application specific integrated circuit (ASIC), a graphic processing unit (GPU), or a neural processing unit (NPU). The processor includes each unit or each means that executes various types of processing in the present embodiment. Types of hardware may be a combination of different types of hardware. In a case where a plurality of pieces of hardware are configured to execute one or a plurality of types of processing of a processor, the plurality of pieces of hardware may be present in apparatuses physically separated from each other or may be present in the same apparatus. In any embodiment, the order of each processing via the processor is not limited to the above order and may be appropriately changed. The hardware is composed of an electric circuit (circuitry) in which circuit elements such as semiconductor elements are combined.

The present embodiment may be implemented by hardware, software, firmware, microcode, or a combination thereof. Software, firmware, and microcode are composed of a program. For example, the program may be a program module group, and each function thereof may be implemented by a processor configured to execute each function. The program may be a program code or a plurality of code segments stored in one or a plurality of non-transitory computer-readable media (for example, recording media or other storages). The program may be divided and stored in a plurality of non-transitory computer-readable media present in apparatuses physically separated from each other. The program code or the code segments may represent any combination of a procedure, a function, a subprogram, a routine, a subroutine, a module, a software package, a class, an instruction, a data structure, and a program statement. The program code or the code segments may be connected to other code segments or hardware circuits by transmitting and receiving information, data, an argument, a parameter, or content of a memory.

While each embodiment illustrates the digital camera in which the imaging optical system 13 is fixed to the camera body 11, the present invention is not limited to this, and a lens-interchangeable digital camera in which an imaging optical system is interchangeable with respect to a camera body may be applied. While each embodiment illustrates the lens barrel 12 not including a zoom lens, the present invention is not limited to this, and the imaging optical system 13 may be configured to include a zoom lens. The present invention can be applied to a smartphone and a camera such as a video camera, other than the digital camera.

### Appendix 1

An imaging apparatus including a first processor, and a recording medium,
in which the first processor is configured to
perform specific processing including any of invisibility processing or encryption processing for the recording medium on image data obtained in a first imaging mode in which image formats are restricted,
store the image data on which the specific processing is performed, in a second storage region of the recording medium in which a first storage region conforming to a DCF standard and the second storage region not conforming to the DCF standard are generated, and
in storing the image data in the second storage region, create a management file in which information related to the image data is recorded.

### Appendix 2

The imaging apparatus according to Appendix 1,
in which the management file includes at least one of presence or absence of the image data on which the invisibility processing is performed, information during imaging, or information for restoring the image data on which the encryption processing is performed.

### Appendix 3

An application program causing an information processing apparatus that is connected to the imaging apparatus according to Appendix 1 and includes a second monitor portion and a second processor, to execute a process including
via the second processor,
performing any of executing a fifth instruction for performing visibility processing on image data on which the invisibility processing is performed, or executing a sixth instruction for performing restoration processing on image data on which the encryption processing is performed, with respect to the image data stored in the second storage region.

### Appendix 4

The application program according to Appendix 3,
in which the second processor is configured to
receive the image data transmitted from the imaging apparatus based on the fifth instruction, and
output an image to the second monitor portion based on the image data on which the visibility processing is performed.

### Appendix 5

The application program according to Appendix 3,
in which the second processor is configured to
receive the image data transmitted from the imaging apparatus based on the sixth instruction, and
output an image to the second monitor portion based on the image data on which the restoration processing is performed.

### Appendix 6

An imaging system including the imaging apparatus according to Appendix 1, and an information processing apparatus including a second monitor portion and a second processor,
in which the second processor is configured to
perform any of executing a fifth instruction for performing visibility processing on image data on which the invisibility processing is performed, or executing a sixth instruction for performing restoration processing on image data on which the encryption processing is performed, with respect to the image data stored in the second storage region.

### Appendix 7

An imaging method using an imaging apparatus including a first processor and a recording medium, the method including
via the first processor,
a step of performing specific processing including any of invisibility processing or encryption processing for the recording medium in which a first storage region conforming to a DCF standard and a second storage region not conforming to the DCF standard are generated, on image data acquired in a first imaging mode in which image formats are restricted,
a step of storing the image data on which the specific processing is performed, in the second storage region, and
a step of creating, in storing the image data in the second storage region, a management file in which information related to the image data is recorded.

### Appendix 8

An imaging program using an imaging apparatus including a first processor and a recording medium, the program causing the first processor to execute
a function of performing specific processing including any of invisibility processing or encryption processing for the recording medium in which a first storage region conforming to a DCF standard and a second storage region not conforming to the DCF standard are generated, on image data in a first imaging mode in which image formats are restricted,
a function of storing the image data on which the specific processing is performed, in the second storage region, and
a function of creating, in storing the image data in the second storage region, a management file in which information related to the image data is recorded.

### Explanation of References

10: imaging apparatus
11: camera body
11A: grip
12: lens barrel
13: imaging optical system
14: mode dial
15: release switch
16: power switch
17: lever
18: flash device
19: illumination device
21: imaging element
22: display
23: electronic view finder
24: sub-display
31: controller
32: shutter unit
33: shutter motor
34: motor driver
35: image memory
36: bus line
37: image data processing portion
38: display driver
41: card interface (I/F)
42: memory card
50: touch operation disabled region
51: touch operation enabled region
53: remaining battery capacity display portion
54: F number display portion
55: captured image count display portion
56: remaining capture count display portion
57: lever state display portion
58: flash presence or absence display portion
59: date display portion
60: AF/MF switching portion
60a: round button portion
61: date ON/OFF switching portion
61a: round button portion
62: MF focal length operator
62a: slider
65: warning LED
66: film camera mode finish selection screen
67: cartridge image
68: finish selection button
70: film camera mode finish screen
71: message
73: thumbnail image group
100: first storage region
101: second storage region
102: first directory
103: second directory
105, 106: image data
107: management file
110: information processing apparatus
111: display
112: controller
115: imaging system
117: specific processing-completed image data information
120: management file
CL: central axis
OA: optical axis

## Claims

1. An imaging apparatus comprising:
a first monitor portion; and
a first processor,
wherein the first processor is configured to,
in a case where a first imaging mode in which image formats are restricted is selected, output user interface information related to imaging to the first monitor portion and restrict output of a live view to the first monitor portion.

2. The imaging apparatus according to claim 1,
wherein the first processor is configured to:
set a lock on an imaging operation of a first member in the first imaging mode; and
unlock the lock in response to an operation of a second member.

3. The imaging apparatus according to claim 2,
wherein the first processor is configured to,
in a case where the lock is unlocked, output information indicating that the imaging operation of the first member is valid, as the user interface information.

4. The imaging apparatus according to claim 2,
wherein the first processor is configured to,
in a case where the imaging operation is performed while the lock is set on the imaging operation,
output information indicating that the imaging operation is invalid.

5. The imaging apparatus according to claim 1,
wherein the first processor is configured to,
in a case where an imaging operation of a first member is performed, output information indicating the number of captured images as the user interface information.

6. The imaging apparatus according to claim 1,
wherein, in the first imaging mode,
the first processor is configured to restrict output of image data after the imaging to the first monitor portion.

7. The imaging apparatus according to claim 1,
wherein, in a case where a selection to finish the first imaging mode is made,
the first processor is configured to store a series of image data obtained by the imaging in a recording medium in a single unit format.

8. The imaging apparatus according to claim 1,
wherein the first processor is configured to,
in a case where a captured image count in the first imaging mode reaches a predetermined number, invalidate an imaging operation of a first member and unlocking of a lock on the imaging operation of a second member.

9. The imaging apparatus according to claim 1,
wherein the first processor is configured to,
in the first imaging mode, in a case where a captured image count reaches a predetermined number, store a series of image data obtained by the imaging in a recording medium in a single unit format.

10. The imaging apparatus according to claim 1,
wherein the first processor is configured to,
in a case where the first imaging mode is finished, transition to a second imaging mode in which the restriction of the output to the first monitor portion is released.

11. The imaging apparatus according to any one of claims 1 to 10,
wherein the first processor is configured to
restrict video formats among the image formats in the first imaging mode.

12. The imaging apparatus according to claim 8 or 9,
wherein the first processor is configured to
output the predetermined number as the user interface information.

13. The imaging apparatus according to claim 1,
wherein the first processor is configured to:
in the first imaging mode, store a series of image data obtained by the imaging in a recording medium in a single unit format on which display restriction on the first monitor portion is imposed; and
in a case where a selection to finish the first imaging mode is made, release the display restriction.

14. The imaging apparatus according to claim 1,
wherein the first processor is configured to,
in the first imaging mode, store a series of image data obtained by the imaging in a second storage region of a recording medium in which a first storage region conforming to a DCF standard and the second storage region not conforming to the DCF standard are generated.

15. The imaging apparatus according to claim 14,
wherein the first processor is configured to,
in the first imaging mode, store the series of the image data obtained by the imaging under a second directory that is generated in the second storage region and that does not conform to the DCF standard.

16. The imaging apparatus according to claim 15,
wherein the first processor is configured to
store image data obtained in a second imaging mode in which the image formats are not restricted, under a first directory of the first storage region.

17. The imaging apparatus according to claim 15,
wherein the first processor is configured to,
each time the first imaging mode is selected, create the second directory in the second storage region.

18. The imaging apparatus according to claim 15,
wherein the first processor is configured to
generate a management file in which information related to the image data is recorded, under the second directory.

19. The imaging apparatus according to claim 16,
wherein the first directory of the first storage region and the second directory are distinguishable from each other.

20. The imaging apparatus according to claim 19,
wherein the first directory and the second directory are organized in a hierarchy according to a common rule.

21. The imaging apparatus according to claim 14,
wherein the first processor is configured to,
in a case where a first instruction is acquired, enable display of the image data stored in the second storage region on the first monitor portion based on the first instruction.

22. The imaging apparatus according to claim 21,
wherein the first processor is configured to
output an image of list data in which thumbnail images of the image data are listed, to the first monitor portion.

23. The imaging apparatus according to claim 14,
wherein the first processor is configured to,
in a case where a second instruction from an external apparatus is acquired, move the image data stored in the second storage region to the first storage region based on the second instruction.

24. A computer readable medium storing an application program for an information processing apparatus that is connected to the imaging apparatus according to claim 14 and that includes a second monitor portion and a second processor, the program causing the second processor to execute a process comprising:
performing one of:
(i) executing a third instruction for enabling the image data stored in the second storage region to be displayed on the second monitor portion; or
(ii) executing a fourth instruction for moving the image data stored in the second storage region to the first storage region.

25. The computer readable medium according to claim 24,
wherein the second processor is configured to:
receive the image data transmitted from the imaging apparatus based on a first instruction; and
output an image of list data in which thumbnail images of the image data are listed, to the second monitor portion based on the image data.

26. An imaging system comprising:
the imaging apparatus according to claim 14; and
an information processing apparatus including a second monitor portion and a second processor,
wherein the second processor is configured to
perform one of:
(i) executing a third instruction for enabling the image data stored in the second storage region to be displayed on the second monitor portion; or
(ii) executing a fourth instruction for moving the image data stored in the second storage region to the first storage region.

27. An imaging method using an imaging apparatus including a first monitor portion and a first processor, the method comprising:
via the first processor,
a step of outputting, in a case where a first imaging mode in which image formats are restricted is selected, user interface information related to imaging to the first monitor portion and restricting output of a live view to the first monitor portion.

28. The imaging method according to claim 27, further comprising:
via the first processor,
a step of storing, in the first imaging mode, a series of image data obtained by the imaging in a second storage region of a recording medium in which a first storage region conforming to a DCF standard and the second storage region not conforming to the DCF standard are generated.

29. A computer readable medium storing an imaging program for an imaging apparatus including a first monitor portion and a first processor, the program causing the first processor to execute:
a function of outputting, in a case where a first imaging mode in which image formats are restricted is selected, user interface information related to imaging to the first monitor portion and restricting output of a live view to the first monitor portion.

30. The computer readable medium according to claim 29, wherein the imaging program further causes the first processor to execute
a function of storing, in the first imaging mode, a series of image data obtained by the imaging in a second storage region of a recording medium in which a first storage region conforming to a DCF standard and the second storage region not conforming to the DCF standard are generated.

31. An imaging apparatus comprising:
a first monitor portion; and
a first processor,
wherein the imaging apparatus has a first imaging mode in which restriction on a digital function is imposed, and
in a case where the first imaging mode is selected,
the first processor is configured to perform, as the restriction on the digital function, at least two of the following:
(a) restriction of image formats;
(b) restriction of output of a live view to the first monitor portion;
(c) restriction of storage of a series of image data obtained by imaging in the first imaging mode in a format other than a single unit format;
(d) restriction of a number of captured images; and
(e) restriction of a second imaging operation following a first imaging operation.
